Europäisches Patentamt

(19) European Patent Office

Office européen des brevets

(11) Numéro de publication: **0 130 859**
**B1**

(12) **FASCICULE DE BREVET EUROPEEN**

(45) Date de publication du fascicule du brevet:
15.07.87

(51) Int. Cl.⁴: **G 02 F 1/29,** G 02 F 1/015

(21) Numéro de dépôt: **84401027.2**

(22) Date de dépôt: **18.05.84**

(54) **Dispositif de déflexion d'un faisceau infra-rouge à commande électronique.**

(30) Priorité: **31.05.83 FR 8309007**

(43) Date de publication de la demande:
**09.01.85 Bulletin 85/2**

(45) Mention de la délivrance du brevet:
**15.07.87 Bulletin 87/29**

(84) Etats contractants désignés:
**DE GB**

(56) Documents cités:
**EP - A - 0 051 394**
**FR - A - 2 254 057**
**US - A - 4 013 000**
**US - A - 4 439 016**

(73) Titulaire: **THOMSON-CSF, 173, Boulevard Haussmann,
F-75379 Paris Cedex 08 (FR)**

(72) Inventeur: **Papuchon, Michel, THOMSON-CSF
SCPI 173, bld Hausmann, F-75379 Paris Cedex 08 (FR)**
Inventeur: **Malard, Marcel, THOMSON-CSF SCPI 173, bld
Hausmann, F-75379 Paris Cedex 08 (FR)**
Inventeur: **de Corlieu, Guy, THOMSON-CSF
SCPI 173, bld Hausmann, F-75379 Paris Cedex 08 (FR)**

(74) Mandataire: **Trocellier, Roger et al, THOMSON-CSF
SCPI 19, avenue de Messine, F-75008 Paris (FR)**

## Description

La présente invention a pour objet un dispositif de déflexion d'un faisceau infra-rouge suivant une direction prédéterminée.

Pour opérer la déflexion d'un faisceau d'énergie rayonnée avec une grande précision, il est, en général, préférable d'utiliser un dispositif fonctionnant par valeurs discrètes, celle-ci pouvant en effet être exactement définies par la structure même du dispositif; elles sont donc plus stables, c'est à dire insensibles aux fluctuations ou perturbations extérieures.

Un réseau de diffraction permet une déflexion globale d'un faisceau incident suivant une direction privilégiée prédéterminée et suivant la direction qui lui est symétrique par rapport à la normale au plan du réseau. Un tel réseau ne permet donc d'obtenir la déflexion d'un faisceau incident que dans deux directions prédéfinies symétriques. Pour constituer un dispositif permettant de défléchir successivement un faisceau dans plusieurs directions définies, il est donc nécessaire d'associer plusieurs réseaux, avec les inconvénients que celà entraîne en ce qui concerne d'une part le rendement lumineux de la déflexion, et d'autre part, surtout, la précision de la déflexion.

Un dispositif de l'art antérieur est décrit dans la demande de brevet français FR-A-2 254 057. Ce dispositif est un dispositif de déflexion d'un faisceau d'énergie rayonnée cohérente et polarisée, sous l'action d'un signal électrique de commande, comportant: une couche d'un matériau électro-optique; des électrodes de l'une des faces au moins étant transparentes, et des moyens d'excitation de ces électrodes recevant un signal de commande. L'une des faces de cette couche porte un ensemble d'électrodes de même étendue, contiguës mais isolées électriquement, portées sélectivement à des potentiels électriques de valeurs prédéfinies, modifiant ainsi spatialement le déphasage du faisceau incident afin de constituer les lignes d'un réseau diffractant. Le pas de ce réseau est variable et fonction de la répartition des valeurs prédéfinies du potentiel sur les électrodes.

Contrairement à ce dispositif de l'art antérieur, le dispositif de l'invention concerne la déflexion d'un faisceau préalablement divisé en plusieur faisceaux élémentaires, chacun d'eux traversant respectivement un modulateur de phase comportant un guide d'onde et au moins une électrode qui lui est adjacente.

De plus par rapport à ce dispositif de l'art antérieur, le dispositif de l'invention a pour objet la déflexion d'un faisceau situé dans le domaine infra-rouge. En effet l'extension du champ des possibilités dés dispositifs optoélectriques fonctionnant dans l'infra-rouge moyen, notamment ceux travaillant dans la bande 9,5 µm − 10,6 µm qui est celle dans laquelle fonctionne le laser à dioxyde de carbone, fait apparaître la nécessité d'utiliser un dispositif de déflexion rapide, donc statique, d'un faisceau lumineux permettant l'accès aléatoire de tous les points de l'intervalle angulaire de déflexion.

L'invention a pour objet un dispositif de déflexion d'un faisceau infra-rouge comportant une source d'un faisceau infra-rouge et un corps en matériau électro-optique muni d'électrodes, des moyens générateur de signaux de commande reliés à ces électrodes, cette source étant couplée à ce corps, caractérisé en ce que ce corps comporte au moins une plaquette de matériau électro-optique et que ledit dispositif comprend des moyens de couplage et de division du faisceau infra-rouge en N faisceaux élémentaires, N étant un nombre entier déterminé, et N modulateurs de phase discrets disposés sur chaque plaquette, chaque modulateur de phase comportant un guide d'onde monomode auquel au moins une électrode est adjacente, chaque guide ayant une de ses extrémités couplée aux moyens de couplage et de division du faisceau infra-rouge et son autre extrémité formant une des N sources élémentaires qui délivrent un faisceau unique défléchi.

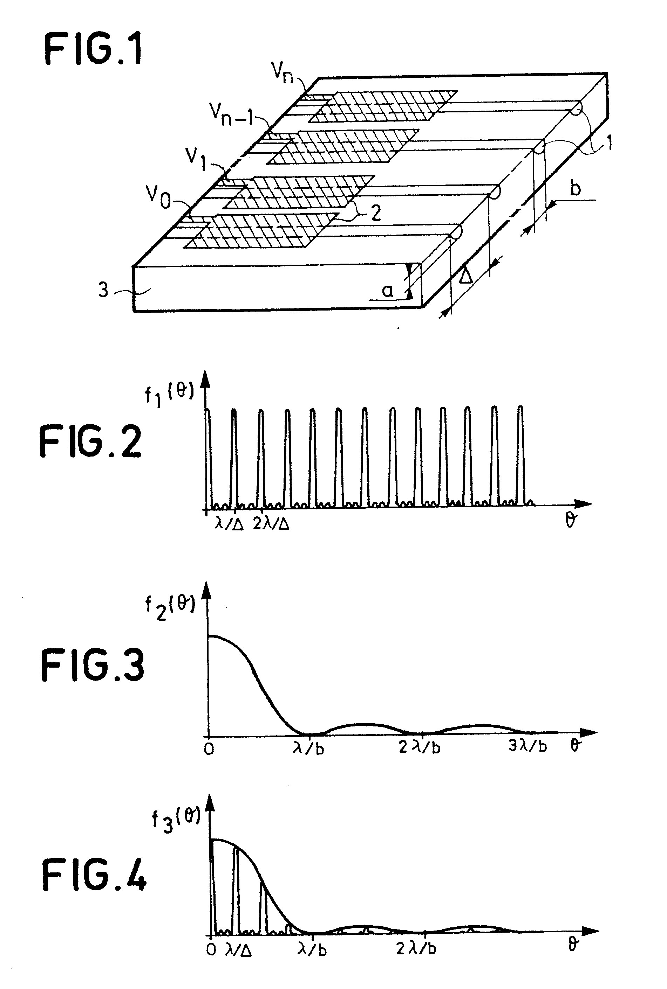

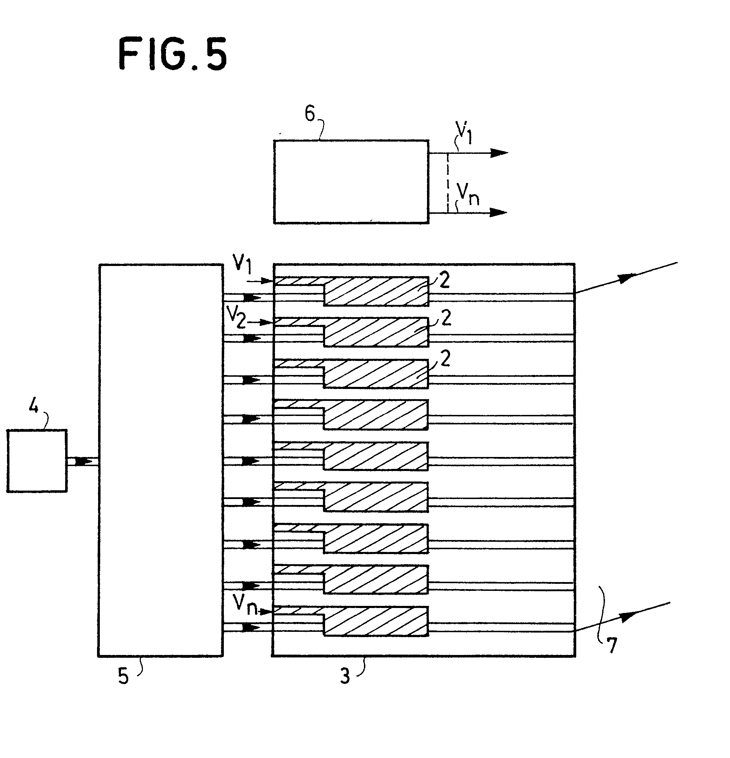

D'autres aspects et avantages de l'invention seront mieux compris à l'aide de la description ci-après, fournie à titre d'exemple non limitatif, ainsi que des figures annexées parmi lesquelles:
− la figure 1 représente le dispositif de l'invention.
− la figures 2 à 4 illustrent différents aspects du dispositif de l'invention.
− la figure 5 représente une vue schématique du dispositif de l'invention on.

Le dispositif de l'invention est basé sur les possibilités de réalisation de guides d'ondes monomodes dans un substrat et de déphaseurs commandables utilisant l'effet électro-optique au sein d'un même matériau. On obtient ainsi de véritables circuits intégrés optiques regroupant sur une même plaquette plusieurs déphaseurs commandables individuellement. Le matériau de base utilisé est un diélectrique ou un semi-conducteur convenablement choisi. L'ensemble du dispositif est réalisé à la surface d'un substrat possédant des propriétés électrooptiques, tel que le niobate de lithium (LiNbO₃) et le tantalate de lithium (LiTaO₃) (pour le domaine visible ou infra-rouge proche), ou par exemple l'arseniure de gallium (AsGa) (pour l'infra-rouge proche et plus lointain). Dans un substrat de niobate de lithium par exemple, les guides d'ondes optique sont obtenus par diffusion de titane. Cette diffusion est sélective grâce à des procédés de photolithographie classique. Dans le cas de semi-conducteurs, ces guides d'ondes peuvent être réalisés grâce à des techniques d'épitaxie en phase liquide ou gazeuse. Ainsi les procédés convenant à l'élaboration de ces circuits intégrés optiques sont ceux qui sont utilisés dans la fabrication des dispositifs électroniques équivalents (épitaxie et/ou diffusion masquée, microlithographie par exemple). Il est donc possible en couplant une source de rayonnement infra-rouge aux extrémités d'entrée de ces guides d'ondes par l'intermédiaire d'un dispositif séparateur de faisceau, réalisé en optique intégrée par exemple, de réaliser le dispositif de l'invention tel qu'il apparaisse comme un réseau de N sources élémentaires (extrémités de sortie des N guides diffusés du circuit intégré optique) dont la phase relative est commandable de façon individuelle; N étant un nombre entier déterminé. Les électrodes sont disposées sur tout ou partie de chacun des guides diffusés et permettent ainsi d'en faire varier l'indice en fonction du champ électrique E appliqué.

Le dispositif proposé se compose donc d'un réseau de N déphaseurs commandables intégrés à N guides dont les centres des extrémités, de sortie émergent de la plaquette substrat sur une ligne droite. La répartition des extrémités de sortie sur cette droite est symétrique par rapport à l'une d'entre elles.

Dès lors, comme dans la théorie des réseaux de diffraction, si l'on effectue la composition en champ éloigné du rayonnement émis par les N sources on voit qu'à une direction particulière du plan perpendiculaire aux extrémités de sortie des N guides et passant par la droite lieu de leur centre correspond une répartition particulière des phases relatives de chacunes ou, ce qui revient au même, une répartition des tensions appliquées aux électrodes des déphaseurs. Il est donc possible, en modifiant la répartition de tension d'obtenir, dans un plan gisement par exemple, la déflexion du faisceau infra-rouge dans un certain domaine angulaire: le dispositif conforme à l'invention est donc un système de balayage électronique unidimensionnel appliqué au domaine optique.

A la figure 1 est représentée une réalisation partielle du dispositif de l'invention donnée à titre d'exemple pour en faire mieux comprendre le fonctionnement. Le dispositif est constitué des N guides monomodes 1 intégrés dans le substrat commun 3, qui a la forme d'une plaquette, qui forme électrode commune. Les N métallisations 2 disposées sur une partie des guides 1 permettent la commande individuelle de phase de l'onde transportée par chacun de ces guides. Mais on peut aussi considérer une configuration classique des électrodes; celles-ci étant disposées deux par deux de façon adjacente à chaque d'onde.

Le dispositif proposé comporte donc, pour reconstituer le faisceau unique de grande étendue à défléchir, un certain nombre de sources élémentaires, auxquelles on impose une distribution de phase relative telle que chacun des incréments de puissance corespondant arrive en phase sur le plan à l'infini dont la normale fait l'angle θ désiré par rapport à celle du plan des sources.

Les signaux de commande des électrodes peuvent respectivement former les paliers d'une rampe de tension, ce qui permet de choisir l'angle θ de déflexion. Mais on peut aussi choisir un signal de forme précalculée pour obtenir une figure de diffraction particulière.

De plus, si le pas $\triangle$ (distance entre deux sources élémentaires plus proches voisines) est maintenu constant comme représenté à la figure 1 la distribution angulaire d'intensité à l'infini résulte de la composition de deux termes: une distribution de type réseau comprenant une suite indéfinie de modes réseau régulièrement espacés, comme représenté à la figure 2, ayant subi une convolution avec la fonction diffraction de l'une des sources élémentaires représentée à la figure 3. Dans le cas général, on obtient donc non seulement la propagation du mode central, mais encore celle d'un certain nombre de modes parasites comme représenté à la figure 4.

Ainsi le dispositif de l'invention est représenté schématiquement à la figure 5. La source 4 de rayonnement infra-rouge est couplée à la plaquette 3 de matériau électrooptique, via un séparateur de faisceau 5 qui peut être par exemple réalisé en optique intégrée. Le générateur de signaux 6 permet de commander les différentes électrodes 2 associées à chacun des guides d'onde 1. Les rayonnements optiques qui sont couplés aux entrées des guides d'ondes permettent ainsi d'obtenir en sortie le faisceau 7 défléchi.

Deux solutions sont alors applicables pour supprimer le modes parasites:

— La première solution consite à diminuer suffisamment la valeur de la distance $\triangle$ pour que le premier mode parasite tombe à l'extérieur du lobe de diffraction d'une des sources; la distance intermode est, en effet: $\triangle \theta \simeq \gamma/\triangle$. Cette solution est la plus généralement appliquée en électromagnétisme mais présente dans le domaine des rayonnements infra-rouges l'inconvénient d'exiger un très grand nombre de sources.

La deuxième solution consiste à réaliser les guides d'ondes 1 de manière à faire varier le long de la plaquette la distance $\triangle$ suivant une loi aléatoire $\varepsilon_\triangle$ prédéterminée et en assurant que toute paire de sources élémentaires est équidistante de la source centrale. On montre alors qu'à partir d'un nombre de sources N suffisamment élevé l'addition cohérente d'intensité n'est entièrement conservée que pour une seule direction θ. Cette modulation peut aussi être introduite $[\varepsilon_\varnothing(\theta)]$ sur les signaux de commande des électrodes d'une manière égale chaque paire de guides symétriques par rapport au guide central, les guides étant alors équidistants les uns aux autres. Ce peut donc être une variation aléatoire obtenue par un générateur de signaux aléatoires de l'art connu superposée à la rampe initiale.

A titre d'exemple, avec des guides d'ondes en arseniure de gallium et d'aluminium du type: $Al_x Ga_{1-x} As$ à faible teneur en Aluminium, on peut considérer les ordres de grandeurs suivants:

— N $\simeq$ 91 à 101

— Longueur d'intéraction de chaque guide déphaseur $\simeq$ 40 mm

— Pertes par absorption dans les guides $\simeq$ 10%

— Tension de commande $\simeq$ ± 50 V.

— Lobes secondaires: −10 dB (max.) par rapport au lobe principal.

Une matrice de déphaseurs peut être obtenue par empilement de plusieurs dispositifs décrits ci-dessus. Une telle matrice permet alors d'effectuer le balayage de tout le demi-espace situé au-delà du plan des extrémités de sortie des guides: on est alors en présence d'un dispositif de balayage bidimensionnel permettant une commande électronique en site et gisement. Une modulation aléatoire $\varepsilon_\varnothing$ ($\theta$) étant équivalente à une modulation $\varepsilon_\triangle$, cette façon d'opérer peut faciliter l'élaboration du bloc de déphaseur dont le pas $\triangle$ peut alors être maintenu constant sur les deux dimensions.

Un jeu d'électrodes auxiliaires associés à chacun des guides d'ondes analogues à celles de la figure 1 et séparées de celle-ci peut être ajouté au dispositif pour faciliter l'application de la répartition de tension correspondant à cette modulation aléatoire.

Le dispositif de l'invention permet donc l'accès aléatoire en tout point du domaine angulaire balayé. Cet accès peut être très rapide.

Le dispositif trouve en particulier son application dans les domaines suivants:

– imagerie active;

– dispositif de balayage et de prépointage rapide à accès aléatoire fonctionnant aussi bien à l'émission qu'à la réception;

– dispositifs de pointage et poursuite ultra-rapide et/ou multicibles;

– dispositifs de correction de fronts d'onde à commande électrique.

**Revendications**

1. Dispositif de déflexion d'un faisceau infrarouge comportant une source (4) émettrice d'un faisceau lumineux infra-rouge et un corps en matériau électro-optique muni d'électrodes (2), des moyens générateur de signaux de commande (6) pour alimenter ces électrodes, et des moyens de couplage de cette source à ce corps, caractérisé en ce que les moyens de couplage comportent un séparateur optique (5) pour diviser le faisceau infra-rouge en une pluralité de N faisceaux élémentaires, et que ce corps comporte au moins une plaquette (3) de matériau électro-optique et N modulateurs de phase discrets disposés sur chaque plaquette (3), chaque modulateur de phase comportant un guide d'onde monomode (1) auquel au moins une électrode (2) est adjacente, les guides étant disposés pour recevoir chacun par une de leurs extrémités un faisceau élémentaire correspondant et pour reformer ensemble par leur autre extrémité un faisceau unique de sortie (7) don la deflexion est commandée à partir dudit générateur.

2. Dispositif selon la revendication 1, caractérisé en ce que les guides d'ondes (1) sont réalisés sur l'une des faces de chaque plaquette (3) par création de zones dans lesquelles l'indice de réfraction est supérieur à celui du matériau électro-optique.

3. Dispositif selon la revendication 1, caractérisé en ce que le matériau électro-optique est en arséniure de gallium.

4. Dispositif selon la revendication 3, caractérisé en ce que les guides d'ondes sont obtenus par épitaxie.

5. Dispositif selon la revendication 3, caractérisé en ce que les guides d'ondes sont obtenus par diffusion.

6. Dispositif selon la revendication 1, caractérisé en ce qu'une électrode est disposée sur une partie de chaque guide d'onde (1), le matériau électro-optique formant l'électrode commune.

7. Dispositif selon la revendication 1, caractérisé en ce que deux électrodes sont déposées parallèlement entre elles de façon adjacente à chaque guide d'onde (1).

8. Dispositif selon la revendication 1, caractérisé en ce que les moyens générateur des signaux de commande (6) des électrodes élaborent des signaux formant les paliers d'une rampe de tension.

9. Dispositif selon la revendication 1, caractérisé en ce que les moyens de couplage et de division (5) sont réalisés en optique intégrée.

10. Dispositif selon la revendication 1, caractérisé en ce que les guides d'ondes (1) sont rectilignes et parallèles entre eux.

11. Dispositif selon la revendication 10, caractérisé en ce que les guides d'ondes (1) sont équidistants entre eux.

12. Dispositif selon la revendication 10, caractérisé en ce que les guides d'ondes (1) sont groupés par paires symétriquement par rapport à un guide d'onde central, la distance de l'un des guides de chaque paire par rapport au guide voisin étant obtenue suivant une loi aléatoire.

13. Dispositif selon la revendication 11, caractérisé en ce que les guides d'ondes (1) sont groupés par paires symétriquement par rapport à un guide d'onde central, un signal de modulation aléatoire étant superposé aux signaux de commandes des électrodes de manière égale pour les guides de chaque paire.

14. Dispositif selon la revendication 13, caractérisé en ce qu'une électrode supplémentaire est associée à chaque guide d'onde, le signal de modulation aléatoire étant appliqué à cette électrode.

15. Dispositif selon l'une quelconque des revendications 11 à 14, caractérisé en ce que le corps comporte plusieurs plaquettes (3) superposées les unes au dessus des autres.

**Patentansprüche**

1. Vorrichtung zur Ablenkung eines Infrarotstrahls, mit einer Quelle (4), die einen Infrarotstrahl aussendet, und einem mit Elektroden (2) versehenen Körper aus elektrooptischem Material, mit Mitteln (6) zur Erzeugung von Steuersignalen zur Speisung dieser Elektroden und mit Mitteln zum Koppeln der Quelle an den Körper, dadurch gekennzeichnet, dass die Koppelmittel einen optischen Separator aufweisen, um den Infrarotstrahl in N Elementarstrahlen aufzuteilen, und dass der Körper mindestens ein Plättchen (3) aus elektrooptischem Material und N diskrete auf diesem Plättchen (3) aufgebrachte Phasenmodulatoren aufweist, die je einen Monomode-Wellenleiter (1) besitzen, dem mindestens eine Elektrode (2) benachbart ist, wobei die Anordnung der Wellenreiter so gewählt ist, dass jeder mit einem Ende einen entsprechenden Elementarstrahl empfängt und alle gemeinsam mit ihrem jeweiligen anderen Ende einen einzigen Ausgangsstrahl (7) bilden, dessen Ablenkung von den Mitteln zur Steuersignalerzeugung gesteuert wird.

2. Vorrichtung nach Anspruch 1, dadurch gekennzeichnet, dass die Wellenleiter (1) auf einer Fläche jedes Plättchens (3) durch Erzeugung von Zonen gebildet werden, in denen der Brechungsindex grösser als der des elektrooptischen Materials ist.

3. Vorrichtung nach Anspruch 1, dadurch gekennzeichnet, dass das elektrooptische Material Gallium-Arsenid ist.

4. Vorrichtung nach Anspruch 3, dadurch gekennzeichnet, dass die Wellenreiter durch Epitaxie erhalten werden.

5. Vorrichtung nach Anspruch 3, dadurch gekennzeichnet, dass die Wellenleiter durch Diffusion erhalten werden.

6. Vorrichtung nach Anspruch 1, dadurch gekennzeichnet, dass eine Elektrode auf einem Teil jedes Wellenleiters (1) liegt, während das elektrooptische Material die gemeinsame Elektrode bildet.

7. Vorrichtung nach Anspruch 1, dadurch gekennzeichnet, dass zwei Elektroden einander parallel und jedem Wellenleiter (1) benachbart angeordnet sind.

8. Vorrichtung nach Anspruch 1, dadurch gekennzeichnet, dass die Mittel (6) zur Erzeugung der Steuersignale für die Elektroden Signale erzeugen, die Absätze einer Spannungsrampe bilden.

9. Vorrichtung nach Anspruch 1, dadurch gekennzeichnet, dass die Koppel- und Separatormittel (5) als integrierter optischer Baustein hergestellt ist.

10. Vorrichtung nach Anspruch 1, dadurch gekennzeichnet, dass die Wellenleiter (1) geradlinig und zueinander parallel verlaufen.

11. Vorrichtung nach Anspruch 10, dadurch gekennzeichnet, dass die Wellenleiter voneinander gleiche Abstände besitzen.

12. Vorrichtung nach Anspruch 10, dadurch gekennzeichnet, dass die Wellenleiter (1) paarweise symmetrisch bezüglich eines zentralen Wellenleiters gruppiert sind, wobei sich der Abstand von einem Wellenleiter jedes Paars zum benachbarten Wellenleiter durch ein Zufallsgesetz ergibt.

13. Vorrichtung nach Anspruch 11, dadurch gekennzeichnet, dass die Wellenleiter (1) paarweise symmetrisch bezüglich eines zentralen Wellenleiters gruppiert sind, wobei ein Zufalls-Modulationssignal den Steuersignalen für die Elektroden in gleicher Weise für die Wellenleiter jedes Paares überlagert wird.

14. Vorrichtung nach Anspruch 13, dadurch gekennzeichnet, dass jedem Wellenleiter eine zusätzliche Elektrode zugeordnet ist, wobei das Zufalls-Modulationssignal an diese Elektrode angelegt wird.

15. Vorrichtung nach einem beliebigen der Ansprüche 11 bis 14, dadurch gekennzeichnet, dass der Körper mehrere übereinandergestapelte Plättchen (3) besitzt.

**Claims**

1. An infrared beam deflection device, comprising a source (4) transmitting an infrared light beam and a body of an electrooptical material supplied with electrodes (2), means for generating control signals (6) which are fed to said electrodes, and means for coupling this source to this body, characterized in that the coupling means include an optical separator (5) for subdividing the infrared beam into a plurality of N elementary beams, and that said body comprises at least one dice (3) of an electro-optical material and N distinct phase modulators disposed on each dice (3), each phase modulator including a monomode waveguide (1) which is adjacent to at least one electrode (2), the guides being disposed in such a way that each one receives via one of its ends a corresponding elementary beam and that they reconstitute together by their other ends a common output beam (7), the deflection of which is controlled by said generator means.

2. A device according to claim 1, characterized in that the waveguides (1) are realized on one face of each dice (3) by the creation of zones in which the refraction index exceeds that of the electrooptical material.

3. A device according to claim 1, characterized in that the electro-optical material is gallium arsenide.

4. A device according to claim 3, characterized in that the waveguides are obtained by an epitaxial method.

5. A device according to claim 3, characterized in that the waveguides are obtained by a diffusion method.

6. A device according to claim 1, characterized in that one electrode is disposed on a portion of ech waveguide (1), the electro-optical material constituting the common electrode.

7. A device according to claim 1, characterized in that two electrodes are disposed one parallel to the other and adjacent to each waveguide (1).

8. A device according to claim 1, characterized in that the means for generating the control signals (6) for the electrodes generate signals forming steps of a voltage ramp.

9. A device according to claim 1, characterized in that the coupling and separating means (5) are realised as integrated optical chip.

10. A device according to claim 1, characterized in that the waveguides (1) are rectilinear and are mutually parallel.

11. A device according to claim 10, characterized in that the waveguides (1) are mutually equidistant.

12. A device according to claim 10, characterized in that the waveguides are arranged two-by-two symmetrically with respect to a central waveguide, the distance from one waveguide of each pair to the adjacent waveguide being obtained according to a random law.

13. A device according to claim 11, characterized in that the waveguides (1) are arranged two-by-two symmetrically with respect to a central waveguide, a random modulation signal being superposed to the control signals for the electrodes in an identical fashion for the guides of each pair.

14. A device according to claim 13, characterized in that an additional electrode is associated to each waveguide, the random modulation signal being applied to this electrode.

15. A device according to any one of the preceding claims, characterized in that the body comprises a plurality of dices, one being superimposed on the other.

# FIG.1

# FIG.2

# FIG.3

# FIG.4

# FIG.5